# EUROPEAN PATENT APPLICATION

(11) **EP 1 873 171 A1**
(43) Date of publication of application: **02.01.2008**
(21) Application number: 06012626.5
(22) Date of filing: 20.06.2006
(51) Int. Cl.: C08F 6/20, B01D 61/00, C08F 6/22, C08J 3/02

(54) **Method of concentrating fluoropolymer and fluorine-containing emulsifiers**

(71) Applicant: DAIKIN INDUSTRIES, LTD., Osaka-shi, Osaka 530-8323 (JP)
(72) Inventor: Britnell, Allan, Orangeburg New York 10962 (US); Simpson, Marty, Orangeburg New York 10962 (US); Conheady, James, Orangeburg New York 10962 (US); Hosokawa, Kazutaka, Orangeburg New York 10962 (US)
(74) Representative: Goddar, Heinz J.

(57) **Abstract**

The method for concentrating a fluoropolymer in a fluoropolymer aqueous dispersion includes a step for preparing a fluoropolymer aqueous dispersion, and a step for filtering the fluoropolymer aqueous dispersion in a polymer membrane. The polymer membrane oscillates during the filtration. The method for concentrating a water-soluble, fluorine-containing emulsifier in an aqueous solution containing the water-soluble, fluorine-containing emulsifier includes a step for preparing an aqueous solution containing a water-soluble, fluorine-containing emulsifier, and a step for filtering the aqueous containing the water-soluble, fluorine-containing emulsifier in a polymer membrane. The polymer membrane oscillates during both the filtration steps.

## Description

### BACKGROUND OF THE INVENTION

### Field of the Invention

The present invention relates to a method of concentrating fluoropolymers and water-soluble fluorine-containing emulsifiers.

### Background Information

A fluoropolymer aqueous dispersion is generally manufactured by such methods as emulsion polymerization of fluorine-containing monomers in the presence of an aqueous polymerization initiator and a water-soluble, fluorine-containing emulsifier.

The emulsion-polymerized fluoropolymer aqueous dispersion usually has a solids content of 5 to 45 wt%. Since a more highly concentrated (at least 60 wt%) aqueous dispersion is required when the dispersion is used in such industrial applications as coatings or battery adhesives, the solids concentration of the fluoropolymer aqueous dispersion must be increased. However, a high fluoropolymer concentration is difficult to obtain merely by adding more of the fluoropolymer, and a higher concentration is usually achieved by condensation.

Examples of methods for concentrating the fluoropolymer aqueous dispersion include a method in which an anionic surfactant is used. The method disclosed in the specification of US Patent No. 2478229 that uses an anionic surfactant has drawbacks in that partially irreversible agglomeration occurs in the PTFE particles when the surfactant is rendered insoluble by the addition of a large quantity of electrolyte.

The method for using a nonionic surfactant disclosed in the specification of US Patent No. 3037953 is utilized on an industrial scale since it is capable of producing a relatively highly concentrated aqueous dispersion without causing the PTFE particles to agglomerate. However, this method has drawbacks of poor cost efficiency due to the following factors: The use of large quantities of a specialized surfactant that has a clouding point in a limited temperature range, the need for waste treatment of surfactant having a biased molecular weight distribution (towards hydrophilicity) included in the supernatant fluid, and the large quantities of starting materials wasted. This method also has poor production efficiency due to the need for large quantities of heating energy and a prolonged process.

The evaporation condensation method described in the specification of US Patent No. 3316201 also has drawbacks in that the viscosity of the fluoropolymer aqueous dispersion becomes sensitive to the fluid temperature since the water-soluble polymerization initiator and fluorine-containing emulsifier used in the polymerization reaction remain in high concentration in the fluoropolymer aqueous dispersion after condensation.

Since agglomerated material adheres to the electrode and impedes conduction in the electrical decantation method described in UK Patent No. 642025, the concentrating effects are extremely small in relation to the large amount of electrical energy consumed, a fact that makes this method unsuitable for practical use.

However, membrane separation methods have been proposed (Japanese Examined Patent Application Publication No. 2-34971 and US Patent No. 4369266) that use an ultrafiltration membrane (UF membrane) having pores with a diameter as small as 0.5 times the maximum diameter of the fluoropolymer particles. Membrane separation methods that use this UF membrane have been used in the past to separate polymer materials, and these methods have advantages of low energy consumption in the condensation of fluoropolymer aqueous dispersions, the ability to perform condensation at low cost, freedom from constraints imposed by the type of surfactant, and the ability to reduce the quantity of surfactant used.

Membrane separation methods that use a UF membrane have drawbacks, however, in that the separation rate is low due to the small molecular cutoff of approximately 1000 to several tens of thousands (0.01 µm or less in terms of pore size) of the UF membrane. The UF membrane is also blocked by fluoropolymer particles when the fluid passage rate is increased. Furthermore, PTFE characteristically becomes fibrous when subjected to a mechanical shear force. Therefore, when the filtering pressure is increased in the type of configuration described in the aforementioned Japanese Examined Patent Application Publication No. 2-34971, drawbacks occur in that the PTFE is rendered fibrous by the shear force in the UF membrane portion, and the flow channel and UF membrane are blocked by the resultant fibrous material.

The aqueous fluorine-containing emulsifier used in emulsion polymerization of fluorine-containing monomers described above is also included in the aqueous solution produced after the polymer is separated from the aqueous dispersion, in the effluent from rinsing the polymer, in the gaseous rinse water discharged during drying and heat-treating of the polymer, and in other materials after polymerization is completed. Recovery of the water-soluble, fluorine-containing emulsifier from these aqueous solutions is desired. As described in Japanese Laid-open Patent Application No. 2002-59160 and US Patent No. 6833403, for example, the emulsifier is recovered by such methods in which the aqueous solution is brought into contact with an ion exchange resin, and the emulsifier is adsorbed onto the ion exchange resin, after which the emulsifier is eluted using an appropriate solvent, and the emulsifier is separated from the eluant by extraction or the like.
However, the type of recovery by an ion exchange resin described above has drawbacks in that the efficiency of recovery is low.

In view of the above, it will be apparent to those skilled in the art from this disclosure that there exists a need for an improved method of filtering out fluoropolymer and fluorochemical surfactants that overcomes the problems of the conventional art. This invention addresses this need in the art as well as other needs, which will become apparent to those skilled in the art from this disclosure.

### SUMMARY OF THE INVENTION

An object of the present invention is to provide a concentration method whereby a fluoropolymer in a fluoropolymer aqueous dispersion can be efficiently concentrated, and a water-soluble, fluorine-containing emulsifier can be concentrated in an aqueous solution that contains the water-soluble, fluorine-containing emulsifier.

The present invention is a method for concentrating a fluoropolymer in a fluoropolymer aqueous dispersion by filtration, and includes a preparation step for preparing a fluoropolymer aqueous dispersion. A filtration step for filtering the fluoropolymer aqueous dispersion in a polymer membrane while oscillating the polymer membrane. Oscillating the polymer membrane makes it less likely for the pores of the polymer membrane to become blocked by the fluoropolymer particles, and enables efficient concentration.

The present invention is also a method for concentrating a water-soluble, fluorine-containing emulsifier in an aqueous solution that contains the water-soluble, fluorine-containing emulsifier by filtration, and includes a preparation step for preparing an aqueous solution that contains the water-soluble, fluorine-containing emulsifier, and a filtration step for filtering the aqueous solution that contains the water-soluble fluorine-containing emulsifier in a polymer membrane while oscillating the polymer membrane. Oscillating the polymer membrane makes it less likely for the pores of the polymer membrane to become blocked by the water-soluble, fluorine-containing emulsifier or a stabilizer, and enables efficient concentration.

These and other objects, features, aspects, and advantages of the present invention will become apparent to those skilled in the art from the following detailed description, which, taken in conjunction with the annexed drawings, discloses a preferred embodiment of the present invention.

### DETAILED DESCRIPTION OF THE INVENTION

Selected embodiments of the present invention will now be explained. It will be apparent to those skilled in the art from this disclosure that the following descriptions of the embodiments of the present invention are provided for illustration only and not for the purpose of limiting the invention as defined by the appended claims and their equivalents.

The present invention efficiently concentrates fluoropolymers and water-soluble, fluorine-containing emulsifiers by oscillation filtration.

A first aspect of the present invention provides a method for concentrating a fluoropolymer in a fluoropolymer aqueous dispersion by filtration, wherein the concentration method includes a preparation step for preparing a fluoropolymer aqueous dispersion and a filtration step for filtering the fluoropolymer aqueous dispersion in a polymer membrane while oscillating the polymer membrane. Oscillating the polymer membrane makes it less likely for the pores of the polymer membrane to become blocked by the fluoropolymer particles, and enables efficient concentration.

The concentration method according to a second aspect of the present invention is the concentration method according to the first aspect of the present invention, wherein the polymer membrane in the filtration step is a membrane selected from a UF membrane and an MF membrane.

The concentration method according to a third aspect of the present invention is the concentration method according to the second aspect of the present invention, wherein the polymer membrane in the filtration step is a UF membrane having a pore diameter of 50,000 Daltons or more.

The concentration method according to a fourth aspect of the present invention is the concentration method according to any of the second and third aspects of the present invention, wherein the polymer membrane in the filtration step is a UF membrane having a pore diameter of 10,000 Daltons or more.

The concentration method according to a fifth aspect of the present invention is the concentration method according to any of the second through fourth aspects of the present invention, wherein the polymer membrane in the filtration step is a UF membrane having a pore diameter of 20,000 Daltons or more.

The concentration method according to a sixth aspect of the present invention is the concentration method according to the second aspect of the present invention, wherein the polymer membrane in the filtration step is an MF membrane having a pore diameter of 0.1 µm or less.

The concentration method according to a seventh aspect of the present invention is the concentration method according to any of the second and sixth aspects of the present invention, wherein the polymer membrane in the filtration step is an MF membrane having a pore diameter of 0.05 µm or less.

The concentration method according to an eighth aspect of the present invention is the concentration method according to any of the first through fifth aspects of the present invention, wherein the pressure of the fluoropolymer aqueous dispersion with respect to the polymer membrane is 30 psi or higher and 150 psi or lower in the filtration step.

The concentration method according to a ninth aspect of the present invention is the concentration method according to any of the first through eighth aspects of the present invention, wherein the pressure of the fluoropolymer aqueous dispersion with respect to the polymer membrane is 30 psi or higher and 50 psi or lower in the filtration step.

The concentration method according to a tenth aspect of the present invention is the concentration method according to any of the first through ninth aspects of the present invention, wherein the temperature of the fluoropolymer aqueous dispersion in the filtration step is 20°C or lower.

The concentration method according to an eleventh aspect of the present invention is the concentration method according to any of the first through tenth aspects of the present invention, wherein the frequency of oscillation of the polymer membrane in the filtration step is 49 Hz or higher and 55 Hz or lower.

The concentration method according to a twelfth aspect of the present invention is the concentration method according to any of the first through eleventh aspects of the present invention, wherein the amplitude of oscillation of the polymer membrane in the filtration step is 0.5 inches or more and 1.5 inches or less.

The concentration method according to a thirteenth aspect of the present invention is the concentration method according to any of the first through twelfth aspects of the present invention, wherein the amplitude of oscillation of the polymer membrane in the filtration step is 0.5 inches or more and 1.0 inch or less.

A fourteenth aspect of the present invention provides a method for concentrating a water-soluble, fluorine-containing emulsifier in an aqueous solution that contains the water-soluble, fluorine-containing emulsifier, wherein the concentration method includes a preparation step for preparing an aqueous solution that contains the water-soluble, fluorine-containing emulsifier, and a filtration step for filtering the aqueous solution that contains the water-soluble, fluorine-containing emulsifier in a polymer membrane while oscillating the polymer membrane. Oscillating the polymer membrane makes it less likely for the pores of the polymer membrane to become blocked by the water-soluble, fluorine-containing emulsifier, a stabilizer, or the like, and enables efficient concentration.

The concentration method according to a fifteenth aspect of the present invention is the concentration method according to the fourteenth aspect of the present invention, wherein the polymer membrane in the filtration step is an RO membrane.

The concentration method according to a sixteenth aspect of the present invention is the concentration method according to any of the fourteenth and fifteenth aspects of the present invention, wherein the frequency of oscillation of the polymer membrane in the filtration step is 49 Hz or higher and 55 Hz or lower.

The concentration method according to a seventeenth aspect of the present invention is the concentration method according to any of the fourteenth through sixteenth aspects of the present invention, wherein the amplitude of oscillation of the polymer membrane in the filtration step is 0.5 inches or more and 1.5 inches or less.

The concentration method according to an eighteenth aspect of the present invention is the concentration method according to any of the fourteenth through seventeenth aspects of the present invention, wherein the amplitude of oscillation of the polymer membrane in the filtration step is 0.5 inches or more and 1.0 inch or less.

The concentration method according to a nineteenth aspect of the present invention is the concentration method according to any of the fourteenth through eighteenth aspects of the present invention, wherein the polymer membrane is an RO membrane in which the extraction ratio of NaCl is 96% or higher.

The fluoropolymer aqueous dispersion is manufactured by emulsion polymerization of fluorine-containing monomers in the presence of a water-soluble polymerization initiator and a water-soluble, fluorine-containing emulsifier.

Fluoropolymers include PTFE (which herein includes modified PTFE containing up to 0.001 to 1.0 wt% of other monomers, such as hexafluoropropene, chlorotrifluoroethylene, perfluoro(alkyl vinyl ether), trifluoroethylene, perfluoroalkyl ethylene, perfluoro(alkoxyvinyl ether), or the like), low-molecular-weight PTFE, tetrafluoroethylene-perfluoro(alkyl vinyl ether) copolymers (PFA), tetrafluoroethylene-hexafluoropropylene copolymers (FEP), polyvinylidene fluoride (PVdF), ethylene-tetrafluoroethylene copolymers (ETFE), ethylene-chlorotrifluoroethylene copolymers (ECTFE), polychlorotrifluoroethylene (CTFE), and other fluororesins, as well as vinylidene fluoride-hexafluoropropylene-based elastomers, vinylidene fluoride-tetrafluoroethylene-hexafluoroethylene-based elastomers, vinylidene fluoride-chlorotrifluoroethylene-based elastomers, tetrafluoroethylene-propylene-based elastomers, hexafluoropropylene-ethylene-based elastomers, fluoro(alkyl vinyl ether-olefin)-based elastomers, fluorophosphazene rubber, and other fluorine-based elastomers, and the like. Among these substances, PTFE (including modified PTFE) is particularly difficult to concentrate because of its tendency to become fibrous.

The water-soluble, fluorine-containing emulsifier may, for example, be a fluorine-containing organic acid indicated by the general formula Z(CF₂)ₐCOOH (wherein Z is a hydrogen atom or a fluorine atom, and a is an integer from 6 to 10), the general formula Cl(CF₂CFCl)_{b}CF₂COOH (wherein b is an integer from 2 to 6), the general formula (CF₃)₂CF(CF₂CF₂)_{c}COOH (wherein c is an integer from 2 to 6), or the general formula F(CF₂)_{d}O(CFRCF₂O)ₑCFRCOOH (wherein R is a fluorine atom or a trifluoromethyl group, d is an integer from 1 to 5, and e is an integer from 1 to 5), or an ammonium salt, an alkali metal salt (a potassium salt or sodium salt, for example), or the like.

A salt indicated by the general formula C_{f}F_{2f+1}COOR' or C₃F₇O(CF(CF₃)CF₂O)_{g}CF(CF₃)COOR' (wherein f is an integer from 6 to 9, g is 1 or 2, and R' is an ammonium group or an alkali metal atom) is particularly preferred. Since the manufacturing cost of these water-soluble, fluorine-containing emulsifiers is usually high, recovery of the water-soluble, fluorine-containing emulsifier used in the polymerization reaction is desired.

As a dispersion stabilizer in the reaction system, a hydrocarbon that is essentially inactive in the reaction and has a carbon number of 12 or higher in the liquid state under the reaction conditions may also be used as needed in the amount of about 2 to 10 weight parts per 100 weight parts of the aqueous solvent. Ammonium carbonate, ammonium phosphate, or the like may also be added as a buffer agent in order to adjust the pH during the reaction.

The fluoropolymer obtained by the method described above is obtained as an emulsion polymerization product in the form of particles having an average particle diameter of approximately 0.01 to 0.5 µm.

The fluoropolymer aqueous dispersion of the present invention can be obtained by the general manufacturing method described below. Specifically, a stainless steel (SUS316) autoclave provided with a stainless steel (SUS316) stirring vane and a temperature-regulating jacket may be used to keep the temperature in the system at 60 to 90°C in the presence of deionized water, a water-soluble, fluorine-containing emulsifier (ammonium perfluorooctanoate), and paraffin wax as needed as a dispersion stabilizer for the reaction system. The desired rate of stirring is maintained, and after the system is deoxygenated, the internal pressure is maintained at 1 to 3 MPa using the monomer gas. The reaction starts promptly after the initiator is added, and a decrease in the autoclave pressure is observed, but the monomer gas is continuously fed in order to maintain the desired pressure. The monomer gas is fed until the desired solids concentration is reached. After feeding of the monomer gas and stirring are stopped, the pressure inside the autoclave is immediately returned to normal pressure, and the reaction is completed. The fluoropolymer aqueous dispersion thus obtained by emulsion polymerization generally has a solids concentration of approximately 25 to 40 wt% of the fluoropolymer immediately after emulsion polymerization, and the concentration of the water-soluble, fluorine-containing emulsifier is 400 to 3,000 ppm.

Water is included as the aqueous solvent of the concentration aqueous dispersion, and ethylene glycol, toluene, and other types of water-soluble organic solvents may also be included. A stabilizer may be added to stabilize the fluoropolymer aqueous dispersion. Stabilizers include surfactants and/or polymer dispersion stabilizers. The type of surfactant is not particularly limited, and any anionic surfactant, cationic surfactant, nonionic surfactant, or amphoteric surfactant may be used insofar as it can provide dispersion stability. Polyethylene glycol and the like may also be used as the polymer dispersion stabilizer. These stabilizers may be added in the amount of 1 to 15 wt% with respect to the solids content.

### BRIEF DESCRIPTION OF THE DRAWINGS

Referring now to the attached drawings which form a part of this original disclosure:

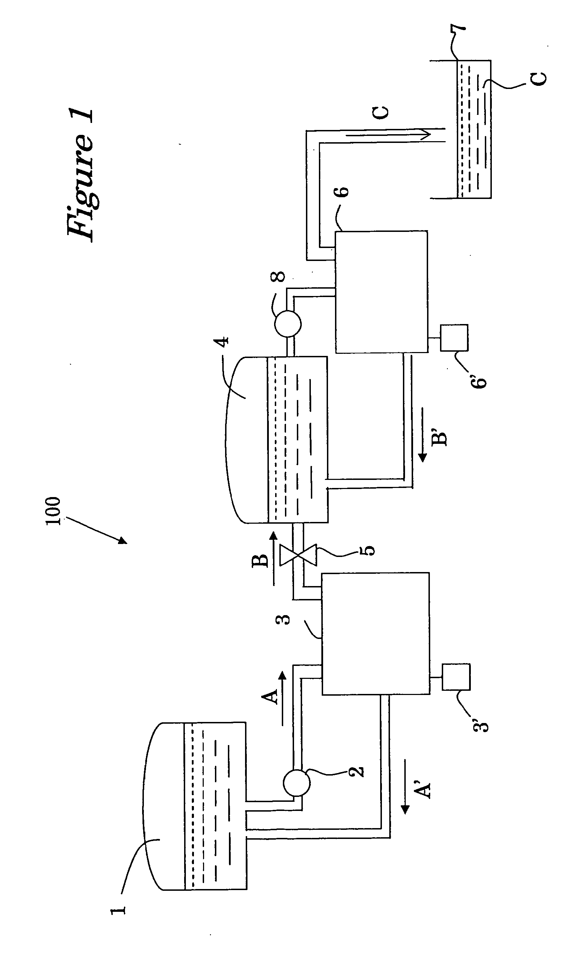

FIG. 1 is a schematic diagram of the filtration system for PTFE/PFOA concentration according to an embodiment of the present invention.

### DETAILED DESCRIPTION OF EXAMPLES

FIG. 1 is a simplified flow diagram of an example of the filtration system for PTFE/PFOA concentration.

In the PTFE/PFOA concentration filtration system 100 shown in FIG. 1, the PTFE aqueous dispersion A is stored in a vessel 1 before concentration. The PTFE aqueous dispersion A in the vessel 1 is fed by a pump 2 to a first oscillation filter 3 through a pipe. The filtrate B that contains PFOA and a nonionic surfactant and has been filtered by the first oscillation filter 3 is transferred to a vessel 4. A valve 5 is open at this time. The concentrated PTFE aqueous dispersion A' is also returned to the vessel 1 through a pipe. The vessel 1 may be designed with a lid that opens to allow the addition of water and nonionic surfactant, and may have a pipe attached thereto. The PTFE aqueous dispersion is thus repeatedly concentrated by a circulation circuit. When concentration is completed, the valve 5 is closed, and the concentrated PTFE aqueous dispersion is taken out of the vessel 1.

The solids concentration of the PTFE aqueous dispersion is increased by this type of cyclic filtration. The PTFE aqueous dispersion prior to concentration contains 25 to 40 wt% of PTFE particles and 400 to 3,000 ppm of PFOA, but it is preferable that the PTFE solids concentration of the PTFE aqueous dispersion ultimately recovered from the vessel 1 is thereby brought to at least 60%, that the ratio of the nonionic surfactant with respect to the fluoropolymer is 2.0 to 8.0 wt%, and that the PFOA concentration is 50 ppm or lower.

Several percent of the nonionic surfactant and less than 1% of PFOA are generally included in the filtrate B in the vessel 4. The filtrate B is transferred by a pump 8 to a second oscillation filter 6. In the second oscillation filter 6, the filtrate B that is an aqueous solution containing PFOA and the nonionic surfactant is filtered and separated into a condensate B' and a filtrate C. The filtrate C is transferred to a vessel 7, and the condensate B' is returned to the vessel 4 and re-transferred to the second oscillation filter 6. The condensate B' can thus be repeatedly concentrated, and concentration can be continued until the desired degree of concentration is reached. The concentrations of PFOA and nonionic surfactant contained in the filtrate C at this time are preferably as low as possible. The PFOA can also be recovered from the aqueous solution containing PFOA and the nonionic surfactant using an ion exchange resin or the like.

Each of the first oscillation filter 3 and the second oscillation filter 6 has an internally mounted motor, torsion spring, and polymer membrane. The polymer membrane is oscillated in a prescribed manner with a prescribed amplitude by driving the motor. A membrane selected from a microfiltration (MF: Micro Filtration) membrane, an ultra filtration (UF: Ultra Filtration) membrane, and a reverse osmosis (RO: Reverse Osmosis) membrane may be installed as the polymer membrane. The polymer membrane is folded over itself several times, and is configured so that filtration is accomplished by the passage of liquid through the membrane. Unlike conventional membrane separation methods, by causing the polymer membrane to oscillate, filtration can be performed without the flow channel being blocked by fibrous PTFE.

An experimental example of the oscillation filtration in the first oscillation filter 3 and second oscillation filter 6 will next be described. In the example below, a New Logic VSEP system having a membrane surface area of 16 square feet was used as the first oscillation filter 3 and second oscillation filter 6.

<Example 1>

A PTFE aqueous dispersion (polymer SSG (conforms to ASTM D4895-89) 2.182 having a solids concentration of 29.7 wt% and an average particle diameter of 0.30 µm) obtained by a general method such as those described above was placed in a stainless steel (SUS304) vessel 1 provided with a temperature-regulating jacket. A nonionic surfactant was furthermore added in the amount of 12 wt% with respect to the PTFE solids content, and the volume was adjusted to 850 liters. A UF membrane having a pore diameter of 20,000 Daltons was installed as the polymer membrane in the first oscillation filter 3, and the oscillation was set to a frequency of 50 Hz and an amplitude of 0.75 inches. The PTFE aqueous dispersion was transferred to the first oscillation filter 3 at a temperature of 20 degrees, a pressure of 40 psi, and a flow rate of 1.0 L/min.

When the volume in the vessel 1 subsequently decreased to approximately 660 liters, water and a nonionic surfactant in the amount of 12 wt% with respect to the PTFE solids content were added, and the volume in the vessel 1 was adjusted to 850 liters. This operation is referred to hereinafter as Operation 1. Operation 1 was repeated until the total volume of the filtrate reached approximately 2,500 liters. Filtration was then stopped when the volume in the vessel 1 decreased to 310 liters. The solids concentration of the PTFE aqueous dispersion obtained from the vessel 1 was 63 wt%, the nonionic surfactant concentration with respect to solids was 4.1 wt%, and the PFOA content was 21 ppm.

<Example 2>

An MF membrane having a pore diameter of 0.05 µm was installed as the polymer membrane in the first oscillation filter 3, and the oscillation was set to a frequency of 50 Hz and an amplitude of 0.75 inches. The PTFE aqueous dispersion was transferred to the first oscillation filter 3 at a temperature of 20 degrees, a pressure of 40 psi, and a flow rate of 1.0 L/min. As a result, it was possible to perform concentration without blocking the MF membrane.

<Example 3>

Using the same conditions and operation as <Example 1>, a UF membrane having a pore diameter of 7,000 Daltons was installed as the polymer membrane in the first oscillation filter 3, the PTFE aqueous dispersion was transferred to the first oscillation filter 3, and filtration was performed, whereupon it was possible to perform concentration without blocking the UF membrane.

<Example 4>

Using the same conditions and operation as <Example 2>, an MF membrane having a pore diameter of 0.1 µm was installed as the polymer membrane in the first oscillation filter 3, the PTFE aqueous dispersion was transferred to the first oscillation filter 3, and filtration was performed. It was possible to perform concentration, although a slight amount of PTFE solids was admixed in the filtrate B.

<Example 5>

An amount of 2,500 liters of the aqueous solution containing PFOA and a nonionic surfactant that was the filtrate B from the abovementioned first oscillation filter 3 was transferred to a second oscillation filter 6 in which an RO membrane having an NaCl extraction ratio of 99.00% was installed as the polymer membrane, and oscillation was set to a frequency of 51 Hz and an amplitude of 0.75 inches in a stainless steel (SUS304) vessel 4 provided with a temperature-regulating jacket. Thereafter, filtration was performed. The temperature of the filtrate in the vessel 4 at this time was 35 degrees, the pressure was 550 psi, and the flow rate of filtration was 0.7 L/min. The volume of the filtrate in the vessel 4 was continuously reduced by filtration. The filtration was stopped when the volume of the filtrate decreased to approximately 300 liters. The PFOA concentration in the concentrated fluid in the vessel 4 was approximately 2,700 ppm, and the concentration of the nonionic surfactant was approximately 30 wt%. PFOA and the nonionic surfactant were not observed in the filtrate C.

The terms of degree such as "substantially," about," and "approximately" as used herein mean a reasonable amount of deviation of the modified term such that the end result is not significantly changed. For example, these terms can be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents. Thus, the scope of the invention is not limited to the disclosed embodiments.

## Claims

1. A method for concentrating a fluoropolymer in a fluoropolymer aqueous dispersion; said concentration method comprising:
a preparation step for preparing a fluoropolymer aqueous dispersion; and
a filtration step for filtering said fluoropolymer aqueous dispersion in a polymer membrane while oscillating said polymer membrane.

2. The concentration method according to claim 1; wherein said polymer membrane is a membrane selected from a group consisting of a UF membrane and an MF membrane.

3. The concentration method according to claim 2; wherein said polymer membrane is a UF membrane having a pore diameter of 50,000 Daltons or more.

4. The concentration method according to claim 3, wherein said polymer membrane is a UF membrane having a pore diameter of 10,000 Daltons or more.

5. The concentration method according to claim 4, wherein said polymer membrane is a UF membrane having a pore diameter of 20,000 Daltons or more.

6. The concentration method according to claim 2, wherein said polymer membrane is an MF membrane having a pore diameter of 0.1 µm or less.

7. The concentration method according to claim 6, wherein said polymer membrane is an MF membrane having a pore diameter of 0.05 µm or less.

8. The concentration method according to claim 1; wherein the pressure of said fluoropolymer aqueous dispersion with respect to said polymer membrane is 30 psi or higher in said filtration step.

9. The concentration method according to claim 1; wherein the pressure of said fluoropolymer aqueous dispersion with respect to said polymer membrane is 150 psi or lower in said filtration step.

10. The concentration method according to claim 9; wherein the pressure of said fluoropolymer aqueous dispersion with respect to said polymer membrane is 50 psi or lower in said filtration step.

11. The concentration method according to claim 1, wherein the temperature of said fluoropolymer aqueous dispersion in said filtration step is 20°C or lower.

12. The concentration method according to claim 1, wherein the frequency of oscillation of said polymer membrane in said filtration step is 49 Hz or higher.

13. The concentration method according to claim 12, wherein the frequency of oscillation of said polymer membrane in said filtration step is 55 Hz or lower.

14. The concentration method according to claim 1, wherein the amplitude of oscillation of said polymer membrane in said filtration step is 0.5 inches or more.

15. The concentration method according to claim 14, wherein the amplitude of oscillation of said polymer membrane in said filtration step is 1.5 inches or less.

16. The concentration method according to claim 15, wherein the amplitude of oscillation of said polymer membrane in said filtration step is 1.0 inch or less.

17. A method for concentrating a water-soluble, fluorine-containing emulsifier in an aqueous solution that contains said water-soluble, fluorine-containing emulsifier; said concentration method comprising:
a preparation step for preparing an aqueous solution that contains said water-soluble, fluorine-containing emulsifier; and
a filtration step for filtering the aqueous solution that contains said water-soluble, fluorine-containing emulsifier in a polymer membrane while oscillating said polymer membrane.

18. The concentration method according to claim 17, wherein said polymer membrane in said filtration step is an RO membrane.

19. The concentration method according to claim 17, wherein the frequency of oscillation of said polymer membrane in said filtration step is 49 Hz or higher.

20. The concentration method according to claim 19, wherein the frequency of oscillation of said polymer membrane in said filtration step is 55 Hz or lower.

21. The concentration method according to claim 17, wherein the amplitude of oscillation of said polymer membrane in said filtration step is 0.5 inches or more.

22. The concentration method according to claim 21, wherein the amplitude of oscillation of said polymer membrane in said filtration step is 1.5 inches or less.

23. The concentration method according to claim 22, wherein the amplitude of oscillation of said polymer membrane in said filtration step is 1.0 inch or less.

24. The concentration method according to claim 18, wherein said polymer membrane is an RO membrane in which the extraction ratio of NaCl is 96% or higher.

## Amended claims

### Amended claims in accordance with Rule 137(2) EPC.

**1.** A method for concentrating a fluoropolymer in a fluoropolymer aqueous dispersion; said concentration method comprising:
a preparation steps for preparing a fluoropolymer aqueous dispersion; and
a filtration step for filtering said fluoropolymer aqueous dispersion in a polymer membrane while oscillating said polymer membrane.

**2.** The concentration method according to claim 1, wherein said fluoropolymer is a polytetrafluoroethylene.

**3.** The concentration method according to claim 1 or 2, wherein said polymer membrane is a membrane selected from a group consisting of an ultra filtration membrane and a micro filtration membrane.

**4.** The concentration method according to claim 3, wherein said polymer membrane is an ultra filtration membrane having a pore diameter of 50,000 Daltons or more.

**5.** The concentration method according to claim 4, wherein said polymer membrane is an ultra filtration membrane having a pore diameter of 100,000 Daltons or more.

**6.** The concentration method according to claim 5, wherein said polymer membrane is an ultra filtration membrane having a pore diameter of 200,000 Daltons or more.

**7.** The concentration method according to claim 3, wherein said polymer membrane is a micro filtration membrane having a pore diameter of 0.1 µm or less.

**8.** The concentration method according to claim 7, wherein said polymer membrane is a micro filtration membrane having a pore diameter of 0.05 µm or less.

**9.** The concentration method according to claim 1, wherein the pressure of said fluoropolymer aqueous dispersion with respect to said polymer membrane is 0.20 MPa (30 psi) or higher in said filtration step.

**10.** The concentration method according to claim 1, wherein the pressure of said fluoropolymer aqueous dispersion with respect to said polymer membrane is 1.04 MPa (150 psi) or lower in said filtration step.

**11.** The concentration method according to claim 10, wherein the pressure of said fluoropolymer aqueous dispersion with respect to said polymer membrane is 0.35 MPa (50 psi) or lower in said filtration step.

**12.** The concentration method according to claim 1, wherein the temperature of said fluoropolymer aqueous dispersion in said filtration step is 20°C or lower.

**13.** The concentration method according to claim 1, wherein the frequency of oscillation of said polymer membrane in said filtration step is 40 Hz or higher.

**14.** The concentration method according to claim 13, wherein the frequency of oscillation of said polymer membrane in said filtration step is 55 Hz or lower.

**15.** The concentration method according to claim 1, wherein the amplitude of oscillation of said polymer membrane in said filtration step is 12.7 mm (0.5 inches) or more.

**16.** The concentration method according to claim 15, wherein the amplitude of oscillation of said polymer membrane in said filtration step is 38.1 mm (1,5 inches) or less.

**17.** The concentration method according to claim 16, wherein the amplitude of oscillation of said polymer membrane in said filtration step is 25.4 mm (1.0 inches) or less.

**18.** A method for concentrating a water-soluble, fluorine-containing emulsifier in an aqueous solution that contains said water-soluble, fluorine-containing emulsifier, said concentration method comprising:
a preparation step for preparing an aqueous solution that contains said water-soluble, fluorine-containing emulsifier; and
a filtration step for filtering the aqueous solution that contains said water-soluble, fluorine-containing emulsifier in a polymer membrane while oscillating said polymer membrane.

**19.** The concentration method according to claim 18, wherein said polymer membrane in said filtration step is a reverse osmosis membrane.

**20.** The concentration method according to claim 18, wherein the frequency of oscillation of said polymer membrane in said filtration step is 49 Hz or higher.

**21.** The concentration method according to claim 20, wherein the frequency of oscillation of said polymer membrane in said filtration step is 55 Hz or lower.

**22.** The concentration method according to claim 18, wherein the amplitude of oscillation of said polymer membrane in said filtration step is 12.7 mm (0.5 inches) or more.

**23.** The concentration method according to claim 22, wherein the amplitude of oscillation of said polymer membrane in said filtration step is 38.1 mm (1.5 inches) or less.

**24.** The concentration method according to claim 23, wherein the amplitude of oscillation of said polymer membrane in said filtration step is 25.4 mm (1.0 inches) or less.

**25.** The concentration method according to claim 19, wherein said polymer membrane is a reverse osmosis membrane in which the extraction ratio of NaCl is 96% or higher.
